# EUROPEAN PATENT SPECIFICATION

(11) **EP 1 494 493 B1**
(45) Date of publication and mention of the grant of the patent: **02.01.2008**
(21) Application number: 03405485.8
(22) Date of filing: 30.06.2003
(51) Int. Cl.: H04Q 7/38, H04M 3/54

(54) **Method and devices for handling subscriber information of a subscriber of a mobile radio network**
Verfahren und Vorrichtungen zur Behandlung von Teilnehmerinformationen eines Teilnehmers in einem mobilen Funknetz
Méthode et dispositifs servant au traitement des données d' abonnés d' un réseau de téléphonie mobile

(43) Date of publication of application: 05.01.2005
(73) Proprietor: Swisscom Mobile AG, 3050 Bern (CH)
(72) Inventor: Van Hemert, Jan, 3068 Utzigen (CH); Granath, Nils, 3014 Bern (CH); Kienle, Thomas, 3006 Bern (CH)
(74) Representative: BOVARD AG

(56) References cited:
- EP-A- 1 089 585
- WO-A-00/67515
- US-A- 5 537 467
- US-A- 5 943 620
- US-A1- 2002 111 176

## Description

### Technical Field

The present invention relates to a method and devices for handling subscriber identifications for a subscriber of a mobile radio network. Particularly, the present invention relates to a method for handling subscriber identifications for a subscriber of a mobile radio network, wherein an identification of the subscriber is stored in a home location register of the mobile radio network, and wherein further subscriber information is stored assigned to the stored subscriber identification in the home location register, and to a computerised proxy visitor location register. The present invention also relates to a computer program product for executing the method.

### Background Art

In the known mobile radio networks, for example GSM (Global System for Mobile Communication) or UMTS (Universal Mobile Telecommunication System) networks, the identification of a subscriber and further information concerning the subscriber are stored in a home location register (HLR) associated with the subscriber. The subscriber identification is, for example, a so-called international mobile subscriber identification (IMSI) which also identifies the HLR associated with the subscriber. The further subscriber information, including one or more calling numbers, for example so-called MSISDN numbers (mobile subscriber Integrated Services Digital Network), is stored in the HLR assigned to the subscriber identification in the HLR. The subscriber identification is also stored on a so-called subscriber identification module (SIM) which is connected to the mobile station of the subscriber, in a fixed or removable way. The mobile station is, for example, a mobile radio telephone or a PDA (personal data assistant) or PC (personal computer) comprising an appropriate communication module. When the subscriber roams from one location area to another, the subscriber identification is registered by the subscriber's mobile station via the base station (BS) of the current cell, via the base station controller (BSC) associated with the BS and via the mobile switching centre (MSC) associated with the BSC in a visitor location register (VLR). Upon registration of the subscriber by the mobile station, the VLR transmits a location update request to the HLR associated with the subscriber. The location update request comprises the subscriber identification and an identification of the VLR. In response to the location update request, the HLR transmits to the VLR the subscriber information needed to be known for proper call handling. The known standardised mobile radio networks only provide for one subscriber identification per subscriber; therefore, it is not possible for a subscriber to have more than one mobile station registered at the same time without holding multiple subscriptions and using a different subscription for registering each of the mobile stations. Because there is a variety of different services available in mobile radio networks, for example data transfer, multimedia applications or voice services, it would be advantageous to be able to have more than one mobile station, with possibly different capabilities, registered as active in a mobile radio network.

Described in the patent application WO 03/005669 are a method and a system for handling registration of multiple subscriber identifications. According to WO 03/005669, multiple subscriber identifications and multiple calling numbers are stored for a subscriber in the HLR. The method and system according to WO 03/005669 enable multiple active registrations of a subscriber. According to WO 03/005669, a registration request comprises a selected one of the subscriber identifications and a selected one of the calling numbers of the subscriber. According to WO 03/005669, incoming sessions for a subscriber are forwarded to a plurality of mobile stations or to a selected one of the plurality of mobile stations, the selection being performed in correspondence with defined criteria. To make possible the selective registration of a tuple of one of the subscriber's identifications and of one of the subscriber's calling numbers, changes to the conventional HLR system are required. Moreover, the method and system according to WO 03/005669 do not make it possible for a subscriber to register/deregister or activate/deactivate a particular subscriber identification without using the mobile station associated with that particular subscriber identification.

The international application WO 00/67515 describes a method for managing mobile station facilities, in which multiple subscriber profiles can be defined for mobile stations. The method comprises steps for forming a new subscriber profile for a mobile station such that calls can be made with the mobile station by using subscriber data of another mobile station and such that calls for the other mobile station will be forwarded to the mobile station. The object of the method is to eliminate the fairly difficult utilization of mobile station facilities.

### Disclosure of Invention

It is an object of this invention to provide a method and devices for handling subscriber identification for a subscriber of a mobile radio network which do not have some of the disadvantages of the prior art. In particular, it is an object of the present invention to provide a method and devices for handling subscriber identification for a subscriber of a mobile radio network which do not require changes to the HLR system. It is a further object of the present invention to provide a method and devices for handling subscriber identification for a subscriber of a mobile radio network which make possible multiple subscriber identifications for a subscriber, without requiring changes to the HLR system. It is a further object of the present invention to provide a method and devices for handling subscriber identification for a subscriber of a mobile radio network which make possible multiple subscriber identifications that can be selectively activated by the subscriber, without requiring changes to the HLR system.

According to the present invention, at least some of these objects are achieved particularly through the features of the independent claims. In addition, further advantageous embodiments follow from the dependent claims and the description.

A first subscriber identification of a mobile radio network is stored in a home location register of the mobile radio network. Further subscriber information is stored assigned to the stored first subscriber identification in the home location register.

According to the present invention, the above-mentioned objects are achieved in particular in that the first subscriber identification, by means of an entry module of a computerised visitor location register, is additionally stored in the proxy visitor location register, in that second subscriber identifications, by means of an entry module of the proxy visitor location register, are stored in the proxy visitor location register, in that a pseudo location update request is transmitted by the proxy visitor location register to the home location register, the pseudo location update request comprising the first subscriber identification stored in the proxy visitor location register and an identification of the proxy visitor location register, in that the subscriber information is downloaded by the home location register to the proxy visitor location register identified in the pseudo location update request, in that a subscriber request for selecting a second subscriber identification are received by means of a subscriber request module of the proxy visitor location register, and in that messages and/or calls directed to a calling number (621) of the first subscriber identification (61) are forwarded to a calling number (631, 641, ...) of the selected second subscriber identification (63, 64, ...). It should be mentioned that the term "proxy" is generally used to indicate a person (legally) empowered by another to act for him, the office or right so to act, or the instrument conferring it. Similarly, in telecommunications and in the field of information technology, the term "proxy" is used to denote technical entities executing functions on behalf or instead of another. For example, a so-called web-proxy provides all the signalling to the Internet on behalf of an end-user, thereby hiding the private identity of the end-user, i.e. the IP address (internet protocol), from the public Internet. In this sense, the term "proxy visitor location register" refers to a computerised entity acting like a visitor location register in a mobile radio network towards a home location register of that mobile radio network but concealing private subscriber identities, i.e. a private calling numbers, from the public mobile radio network. The proxy visitor location register makes it possible to transmit pseudo location update requests to the home location register independently from any activity of a mobile switching centre of the mobile radio network. Based on the information received in the pseudo location update request, from the perspective of the home location register, a mobile station associated with the subscriber identification appears to be registered in the proxy visitor location register. Moreover, based on the information received in the pseudo location update request, from the perspective of the home location register, the proxy visitor location register appears to be associated with a real location area. Based on the information received with the pseudo location update request and stored in the home location register, the mobile station associated with the subscriber identification appears to be roaming in the location area associated with the proxy visitor location register, when in fact, no real mobile station is associated with the subscriber identification, and the proxy visitor location register is not associated with any real location area, mobile switching centre, base station controller, or base station. Thus, the proxy visitor location register and the pseudo location update request make possible the forwarding of pseudo routing information for subscriber identification to the home location register, without any changes required to the system of the home location register. Mobile terminating traffic addressed to a calling number associated with the first subscriber identification will be forwarded by the home location register to the proxy visitor location register, without any changes required to the system of the home location register. Furthermore, downloading and storing the subscriber information in the proxy visitor location register makes possible the access to the subscriber information by other applications, for example a graphical user interface application, without any changes required to the system of the home location register.

Preferably, the transmission of the pseudo location update request is initiated independently from any activity of a mobile station of the subscriber. In other words, the transmission of the pseudo location update request is preferably not dependent on the presence or the registration of a mobile station of the subscriber. The transmission of the pseudo location update request is not triggered by the registration of a mobile station of the subscriber in a visitor location register, but by processes independent from a mobile station of the subscriber or from a mobile switching centre. For example, the pseudo location update request is initiated by a process in the proxy visitor location register, i.e. by the proxy visitor location register itself, or by an application external to the proxy visitor location register. In an embodiment, the transmission of the pseudo location update request is initiated by the storage of the first subscriber identification in the proxy visitor location register, the storage of the first subscriber identification in the proxy visitor location register being initiated and performed independently from any activity of a mobile station of the subscriber. The storage of the first subscriber identification in the proxy visitor location register and consequently the transmission of the pseudo location update request are initiated by a process independent from a mobile station of the subscriber or from a mobile switching centre of the mobile radio network, for example by an external software application. Thus, pseudo routing information for subscriber identification can be forwarded to the home location register independent from the presence or the activity of any mobile station of the subscriber and without any changes required to the system of the home location register.

In the preferred embodiment, the subscriber information comprises a public calling number and one or more additional, second subscriber identifications are stored for the subscriber in the home location register, a private calling number being assigned to each of the additional, second subscriber identifications. The proxy visitor location register transmits a service request to the home location register, the service request comprising the first subscriber identification, a call forwarding service request indicator and one of the private calling numbers to be used as a forwarding number. Multiple subscriber identifications are stored for a subscriber in the home location register, the first of the subscriber identifications being associated with a public calling number and the other, second subscriber identifications being associated with private calling numbers. By means of the call forwarding service request, the first subscriber identification in the home location register is assigned a selected one of the private calling numbers as a forwarding number. Consequently, mobile terminating calls addressed to the public calling number will be forwarded to the selected private calling number. The location information of the mobile station associated with the selected private calling number is stored in the home location register. The location information is assigned to the second subscriber identification, associated with the selected private calling number. Hence, the proxy visitor location register transmitting the call forwarding service request to the home location register makes it possible to selectively set one of the mobile stations associated with the second subscriber identifications as the active mobile station receiving any incoming mobile terminating calls. The selective activation of a mobile station for receiving any incoming mobile terminating calls is possible without any changes required to the system of the home location register. Although one of the mobile stations associated with one of the second subscriber identifications is selected for receiving any incoming mobile terminating calls, the other mobile stations associated with the second subscriber identifications remain active for any mobile originating traffic. Multiple active registrations of subscriber identifications for subscribers are possible without any changes required to the system of the home location register.

In an embodiment a subscriber request is received by the proxy visitor location register, the subscriber request comprising selection information to determine a subscriber identification, a calling number and/or a mobile station of the subscriber, and the proxy visitor location register determines the private calling number to be used as a forwarding number based on the received selection information and transmits the call forwarding service request to the home location register in response to the subscriber request. By designing the proxy visitor location register to receive subscriber requests containing selection information for determining the calling number to be used as a forwarding number, it is possible for subscribers to dynamically select one of his/her mobile stations to be set as the active mobile station receiving any incoming mobile terminating calls, without any changes required to the system of the home location register.

### Brief Description of Drawings

The present invention will be explained in more detail, by way of example, with reference to the drawings in which:
Figure 1 shows a block diagram illustrating a mobile radio network with a mobile switching centre, a visitor location register and a home location register, the home location register being connected to a proxy visitor location register.
Figure 2 shows a block diagram illustrating a proxy visitor location register.
Figure 3 shows a timing diagram illustrating the execution of a pseudo location update between a proxy visitor location register and a home location register.
Figure 4 shows a timing diagram illustrating the data exchange between a communication terminal, a proxy visitor location register and a home location register involved in activating a mobile station for receiving any mobile terminating calls.

### Mode(s) for Carrying Out the Invention

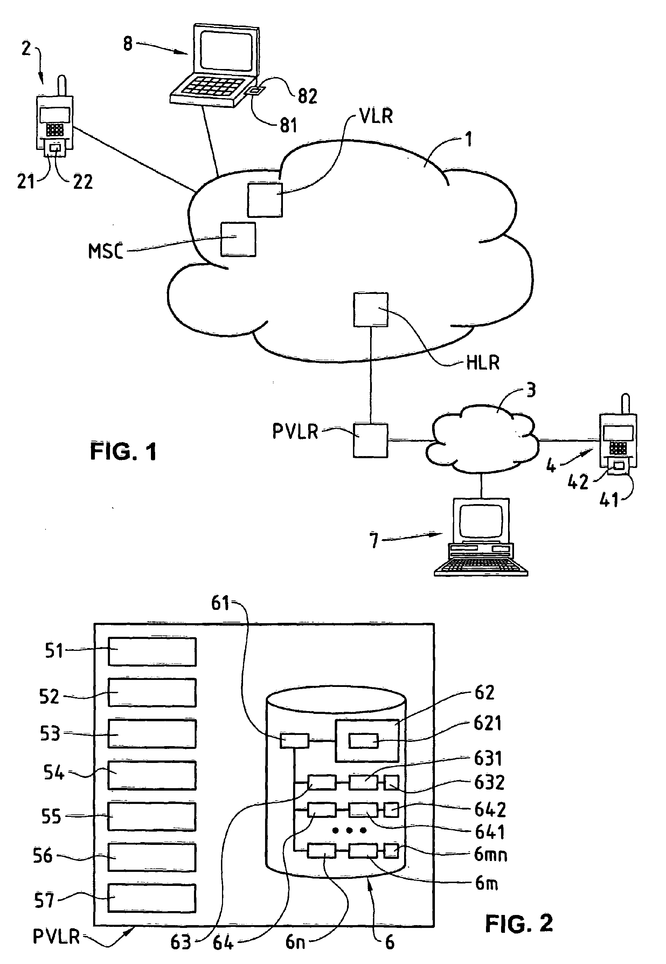

In Figure 1, the reference numeral 1 refers to a conventional mobile radio network such as a GSM or UMTS network. The reference numerals 2, 8 refer to mobile stations of a subscriber roaming in the mobile radio network 1, for example mobile radio telephones, or a PDA or laptop computers which include an appropriate communication module. As illustrated in Figure 1, a fixed or removable subscriber identification module 21, 81, preferably implemented on a chip card, is connected to the mobile station 2, respectively 8. The subscriber identification module 21, 81 includes a subscriber identification 22, 82, for example an IMSI. The subscriber identification 22, 82 identifies the home location register HLR as the subscriber's home database. In the scenario depicted in Figure 1, the subscriber identification 22 associated with the mobile station 2 and the subscriber identification 82 associated with the mobile station 8 are registered in the visitor location register VLR.

As is shown in Figure 1, the home location register HLR is connected to a proxy visitor location register PVLR, for example via a SS7 connection (Signalling System 7). The proxy visitor location register PVLR is accessible for communication terminals 4, 7 via a telecommunications network 3. The telecommunications network 3 comprises, for example, a fixed network, such as a LAN (Local Area Network), a public switched telephone network, an ISDN network (Integrated Services Digital Network) or an IP network (Internet Protocol), e.g. the Internet, and/or a mobile radio network or a WLAN (Wireless Local Area Network). Correspondingly, the communication terminal 4 is a mobile communication terminal, such as a mobile radio telephone with a subscriber identification module 41 and a subscriber identification 42, and the communication terminal 7 is a fixed communication terminal, such as a personal computer or a fixed telephone.

The proxy visitor location register PVLR is illustrated in more detail in Figure 2. The proxy visitor location register PVLR comprises multiple programmed software modules stored on computer readable media and one or more computers for executing the software modules.

The proxy visitor location register PVLR includes a database 6 for storing subscriber information of multiple subscribers. As is illustrated in Figure 2, the database 6 is designed to store for a subscriber:
- a first subscriber identification 61,
- subscriber information 62 associated with the first subscriber identification 61, the subscriber information 62 including a public calling number 621 assigned to the first subscriber identification 61,
- one or more second subscriber identifications 63, 64, ..., 6n (for example subscriber identifications corresponding to the subscriber identifications 22, 82 stored in the subscriber identifications modules 21, 81),
- one or more private calling numbers 631, 641, ..., 6m, each being assigned to one of the second subscriber identifications 63, 64, ..., 6n, and
- one or more flags 632, 642, ..., 6nm, each being assigned to one of the second subscriber identifications 63, 64, ..., 6n, indicating whether the respective second subscriber identification 63, 64, ..., 6n and the respective assigned private calling number 631, 641, ..., 6m are set active for receiving mobile terminating traffic.

In a preferred application, the first subscriber identification 61 constitutes a multicard identification of a subscriber and the second subscriber identifications 63, 64, ..., 6n constitute single card identifications of the subscriber. Typically, only the single card identifications, i.e. the second subscriber identifications 63, 64, ..., 6n, are effectively stored on a subscriber identification module 21, 81, i.e. on a subscriber identification card, and thereby associated with a real mobile station 2, 8. The public calling number 621 assigned to the multicard identification, i.e. to the first subscriber identification 61, serves as a common, publicly known calling number for addressing mobile terminating traffic to any mobile station 2, 8 associated with one of the single card identifications, i.e. with one of the second subscriber identifications 63, 64, ..., 6n. The calling numbers are preferably MSISDN numbers.

**Table 1**

| index | subscriber identification | private calling number | flag |
|---|---|---|---|
| "phone 1" | subscriber identification 22 | "A" | |
| "phone 2" | subscriber identification 42 | "B" | active |
| "laptop 1" | subscriber identification 82 | "C" | |

Preferably, an individual index number (or name) is assigned to each of the stored second subscriber identifications 63, 64, ..., 6n. Table 1 shows an example of single card identifications associated with the mobile stations 2, 8 and the communication terminal 7 of a subscriber.

Aside from the communication module 51 for communicating with the home location register HLR and the telecommunications network 3, the proxy visitor location register PVLR includes an entry module 52, an update request module 53, an update response module 54, a service request module 55, a subscriber request module 56, and an SMS forwarding module 57, preferably all implemented as programmed software modules.

The entry module 52 is designed for storing a first subscriber identification, associated with a subscriber, in the database 6 of the proxy visitor location register PVLR. The entry module 52 is designed to receive the first identification of the user for example via the telecommunications network 3 from an operator using the communication terminal 7 or from a software application external to the proxy visitor location register PVLR. The entry module 52 is preferably also designed for receiving and storing the second subscriber identifications 63, 64, ..., 6n and the associated private calling numbers 631, 641, ..., 6m in the database 6 of the proxy visitor location register PVLR.

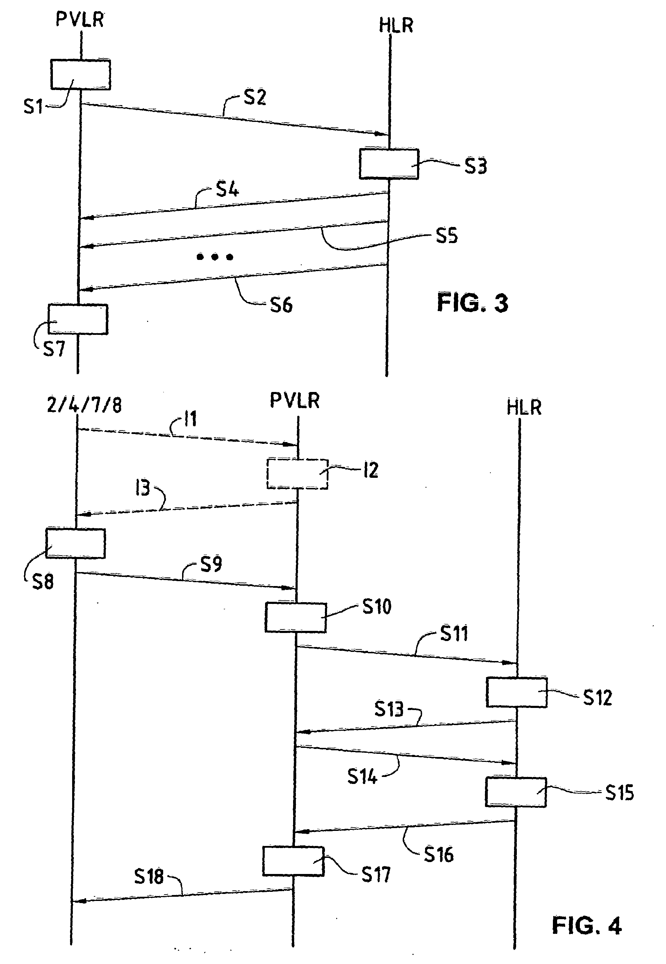

The update request module 53 is designed to transmit a pseudo location update request to the home location register HLR. The pseudo location update request corresponds to a location update request as defined in the standards of the conventional mobile radio networks, with the exception that it is independent from any activity of the mobile stations 2, 8 or the communication terminal 4. Preferably, the pseudo location update request is transmitted by the update request module 53 to the home location register HLR by means of a TCAP dialogue (Transaction Capabilities Application Part) as will be described later in more detail with reference to Figure 3. The pseudo location update request includes the first subscriber identification 61 stored in the proxy visitor location register PVLR and an identification of the proxy visitor location register PVLR, as well as an identification of a location area assigned to the proxy visitor location register PVLR. The update request module 53 is designed to initiate the transmission of the pseudo location update request in response to the storage of the first subscriber identification 61 in the database 6 of the proxy visitor location register PVLR, for example. The transmission of the pseudo location update request can also be initiated in response to an operator request, for example issued by means of communication terminal 7, or according to defined rules or time specifications, for example stored in a scheduler or a batch processing application.

The update response module 54 is designed to receive subscriber information downloaded to the proxy visitor location register PVLR by the home location register HLR in response to the pseudo location update request and to store the received subscriber information 62 in the database 6 assigned to the first subscriber identification 61. The subscriber information 62 is downloaded by the home location register as defined in the standards of the conventional mobile radio networks. Preferably, the subscriber information 62 is downloaded by means of a TCAP dialogue as will be described later in more detail with reference to Figure 3. The downloaded subscriber information includes a public calling number 621 assigned to the first subscriber identification 61.

The service request module 55 is designed to transmit a service request to the home location register HLR. The service request is preferably an SS procedure call (Supplementary Services) for controlling a defined supplementary service and is transmitted by means of a TCAP dialogue as will be described later in more detail with reference to Figure 4. The service request includes the first subscriber identification 61 stored in the database 6, a call forwarding service request indicator which identifies the desired supplementary service as "call forwarding unconditional" (CFU), and one of the private calling numbers 631, 641, ..., 6m to be used as a forwarding number.

The subscriber request module 56 is designed for receiving a subscriber request from a mobile station 2, 8 or via the telecommunications network 3 from a communications terminal 4, 7. The subscriber request is received in data messages, for example SMS (Short Messaging Services) or USSD (Unstructured Supplementary Services Data) data messages, or in data packets, for example IP data packets. The subscriber request comprises selection information to determine a subscriber identification, a calling number and/or a mobile station of the subscriber. The service request module 56 is designed to determine the private calling number 631, 641, ..., 6m to be used as a forwarding number based on the received selection information and to transmit the service request, described above, to the home location register HLR in response to the received subscriber request. Preferably, the selection information includes an index number (or name) defining one of the stored second subscriber identifications 63, 64, ..., 6n associated with the subscriber concerned and its assigned private calling number 631, 641, ..., 6m. For example, index "1" (or "phone 1 ") points to the subscriber identification 63 and the assigned private calling number 631, and index "2" (or "phone 2") points to the subscriber identification 64 and the assigned private calling number 641.

In the following paragraphs, the execution of a pseudo location update between the proxy visitor location register PVLR and the home location register HLR is described with reference to Figure 3.

In step S1, the entry module 52 of the proxy visitor location register PVLR receives and stores a first subscriber identification 61 for the subscriber concerned, as explained above. Preferably, this first subscriber identification 61 constitutes a multicard identification as described above. Preferably, in step S1 the entry module 52 also receives and stores the second subscriber identifications 63, 64, ..., 6n and the associated private calling numbers 631, 641, ..., 6m in the database 6 of the proxy visitor location register PVLR.

In step S2 the update request module 53 of the proxy visitor location register PVLR transmits a pseudo location update request to the home location register HLR. For that purpose, the update request module 53 initiates a TCAP dialogue ("TC-BEG") with the home location register HLR and transmits a "TC-INV UpdateLocation" message to the home location register HLR. The "TC-INV UpdateLocation" message includes the multicard identification of the subscriber, i.e. the first subscriber identification 61, location information, i.e. the location area assigned to the proxy visitor location register PVLR, and an identification of the proxy visitor location register PVLR, i.e. a VLR-number.

In step S3, the home location register HLR executes the standard procedures for dealing with a location update and stores the location information and the VLR-number received in step S2.

In steps S4 to S6, the home location register HLR transmits to the proxy visitor location register PVLR per standard procedures the subscriber information assigned to the subscriber identification received in step S2. For that purpose, the home location register HLR transmits "TC-INV InsertSubsData" messages with "TC-CONTINUE" in steps S4 and S5, and completes the transmission of the subscriber information by transmitting a "TC-RES UpdateLocation" message with TC-END in step S6.

In step S7 the update response module 54 of the proxy visitor location register PVLR stores the subscriber information received in the previous steps in the database 6 and completes the pseudo location update request procedure.

For any mobile terminating SMS messages addressed to the public calling number 621 associated with the first subscriber identification 61, the home location register HLR will indicate the proxy visitor location register PVLR in the routing information returned in response to SRI requests (Send Routing Information) from network entities, such as a short message service centre (SMS-C). Thus any mobile terminating SMS messages to the first subscriber identification 61 will be forwarded to the proxy visitor location register PVLR. The SMS forwarding module 57 is designed to forward received SMS messages addressed to the public calling number 621 associated with the first subscriber identification 61 to the private calling number 631, 641, ..., 6m assigned to the active second subscriber identification 63, 64, ..., 6n. Hence, using the data stored in the database 6, the MMS forwarding module 57 forwards received MMS messages to the mobile station 2, 8 or the communication terminal 7 associated with the active single card identifications, i.e. the active second subscriber identification 63, 64, ..., 6n. The forwarding is executed via SS7 or an SMS-C (Short Message Service Centre).

In the following paragraph, the optional steps I1 to I3 for executing a status inquiry between a communication terminal 4, 7 or a mobile station 2, 8 and the proxy visitor location register PVLR is described with reference to Figure 4.

In step I1 an inquiry request is transmitted from the communication terminal 4, 7 or from the mobile station 2, 8 to the proxy visitor location register PVLR. The inquiry request includes a request type identification and information for identifying and authenticating the requesting subscriber, for example a user name or a calling number and a password. The request type identification specifies, for example, a status inquiry request or an overview inquiry request. In step 12 the subscriber request module 56 determines the multicard identification of the requesting subscriber, i.e. the first subscriber identification 61. In step 13 the subscriber request module 56 transmits an inquiry response to the communication terminal 4, 7 or to the mobile station 2, 8, respectively. Depending on the inquiry type, the inquiry response includes the index number (or name) of the single card identification, i.e. of the second subscriber identification 63, 64, ..., 6n, of which the assigned private calling number 631, 641, ..., 6m is currently set to be the forwarding number, or the inquiry response includes a list of all index numbers (or names) of the single card identifications, i.e. of the second subscriber identifications 63, 64, ..., 6n, with an indication of the active single card identification assigned to the private calling number 631, 641, ..., 6m that is currently set to be the forwarding number.

**Table 2**

| index | flag |
|---|---|
| "phone 1" | |
| "phone 2" | active |
| "laptop 1" | |

Table 2 shows an example of such an enquiry response list in which the mobile station 2 is labelled "phone 1 ", in which the communication terminal 4 is labelled "phone 2" and is activated for receiving incoming mobile terminating traffic, and in which the mobile station 8 is labelled "laptop 1".

In the following paragraphs, the execution of setting a forwarding number for receiving all mobile terminating calls addressed to the public calling number is described with reference to Figure 4.

In step S8 the subscriber specifies the selection information for selecting a subscriber identification, a calling number and/or a mobile station of the subscriber. The specification of the selection information is executed by the subscriber by means of operating elements of the mobile stations 2, 8 or of the communication terminal 4, 7. The selection information is determined through selection of an item from the list received in the optional step I3 or through entry of an index number (or name) as described above. For example, the mobile station 2 labelled as "phone 1" is selected to become activated for receiving incoming mobile terminating traffic addressed to the public calling number 621 of the subscriber.

In step S9 a subscriber request comprising the selection information specified in step S8 is transmitted by the communication terminal 4, 7 to the proxy visitor location register PVLR.

In step S10, based on the selection information received in step S9, the service request module 56 of the proxy visitor location register PVLR determines from the database 6 the private calling number 631, 641, ..., 6m to be used as a forwarding number. For example, the private calling number "A" assigned to the mobile station 2 labelled "phone 1".

In steps S11 and S14 the service request module 56 of the proxy visitor location register PVLR sets up a call forwarding supplementary service in the home location register HLR. For that purpose, the service request module 56 initiates in step S11 a TCAP dialogue ("TC-BEG") with the home location register HLR and registers the call forwarding supplementary service in the home location register HLR by transmitting a "TC-INV RegisterSS" message to the home location register HLR. The "TC-INV RegisterSS" message includes the multicard identification of the subscriber, i.e. the first subscriber identification 61, a "call forwarding unconditional" (CFU) service request indicator and the private calling number 631, 641, ..., 6m to be used as a forwarding number as determined in step S10.

In step S12, the home location register HLR registers the call forwarding supplementary service as requested in step S11.

In step S13, the home location register HLR confirms to the proxy visitor location register PVLR per standard procedure the registration of the supplementary service by transmitting a "TC-RES RegisterSS" message with TC-END.

In step S14 , the service request module 56 activates in the home location register HLR the call forwarding supplementary service registered in step S11. For that purpose, the service request module 56 initiates in step S13 a TCAP dialogue ("TC-BEG") with the home location register HLR and activates the registered call forwarding supplementary service by transmitting a "TC-INV ActivateSS" message to the home location register HLR. The "TC-INV ActivateSS" message includes the multicard identification of the subscriber, i.e. the first subscriber identification 61 and the CFU service request indicator.

In step S15, the home location register HLR activates the call forwarding supplementary service as requested in step S14. Consequently, the private calling number 631, 641, ..., 6m received in the home location register HLR in step S11, for example the private calling number "A", will be activated as the forwarding number for any incoming mobile terminating calls addressed to the public calling number which is assigned to the multicard identification of the subscriber, i.e. the first subscriber identification 61.

In step S16, the home location register HLR confirms to the proxy visitor location register PVLR per standard procedure the activation of the supplementary service by transmitting a "TC-RES ActivateSS" message with TC-END.

In step S17, the service request module 56 of the proxy visitor location register PVLR sets the flag 632, 642, ..., 6nm assigned to the private calling number 631, 641, ..., 6m which was set and activated as the forwarding number in the previous steps. Thereby, it is indicated that the respective private calling number 631, 641, ..., 6m and the associated single card identification, i.e. the associated second subscriber identification 63, 64, ..., 6n, are activated for receiving any incoming mobile terminating traffic addressed to the public calling number 621 assigned to the multicard identification, i.e. the first subscriber identification 61. For example, the private calling number "A" and the subscriber identification 22 assigned to the mobile station 2 are activated, so that any incoming mobile terminating traffic addressed to the subscriber's public calling number will be forwarded to the mobile station 2.

In step S18, the service request module 56 of the proxy visitor location register PVLR transmits a confirmation message to the mobile station 2, 8 or to the communication terminal 4, 7 that transmitted the subscriber request in step S9.

It is possible to offer subscribers convenient user interfaces, for example a graphical user interface on an Internet site, for the administration of call forwarding and/or user information.

The proxy visitor location register PVLR also makes possible temporary calling numbers which can be used anonymously by subscribers. For that purpose, an interested subscriber registers for a temporary calling number. In the proxy visitor location register PVLR, the temporary calling number assigned to the interested subscriber is associated with a temporary subscriber identification and assigned to his permanent subscriber identification and calling number. The temporary calling number is established as a temporary public calling number in the proxy visitor location register PVLR. The proxy visitor location register PVLR executes a pseudo location update for the temporary subscriber identification, as described above. Subsequently, in the home location register HLR, the permanent calling number of the subscriber is set and activated as the forwarding number for the temporary subscriber identification, as described above. Consequently, any incoming mobile terminated traffic addressed to the temporary calling number is forwarded by the home location register HLR to the subscriber's mobile station associated with the permanent identification. Hence, the interested subscriber can anonymously communicate under the temporary identification, revealing only his temporary calling number, without revealing his permanent identification, i.e. his permanent calling number.

## Claims

1. Method for handling subscriber identifications (61, 63, 64, ...) for a subscriber of a mobile radio network (1), comprising
storage of a first subscriber identification (61) and of assigned further subscriber information in a home location register (HLR) of the mobile radio network (1),
**characterised in that** it further comprises
by means of an entry module (52) of a computerised proxy visitor location register (PVLR), storage (S1) of the first subscriber identification (61) in the proxy visitor location register (PVLR),
by means of the entry module (52) of the proxy visitor location register (PVLR), storage (S1) of second subscriber identifications (63, 64, ...) in the proxy visitor location register (PVLR),
transmission (S2) of a pseudo location update request by the proxy visitor location register (PVLR) to the home location register (HLR), the pseudo location update request comprising the first subscriber identification stored in the proxy visitor location register (PVLR) and an identification of the proxy visitor location register (PVLR), wherein the identification of the proxy visitor location register (PVLR) is stored in the home location register (HLR),
download (S4, S5) of the subscriber information by the home location register (HLR) to the proxy visitor location register (PVLR) identified in the pseudo location update request,
by means of a subscriber request module (56) of the proxy visitor location register (PVLR), receipt of a subscriber request for selecting a second subscriber identification (63, 64, ...), and
the proxy visitor location register (PVLR) forwarding messages, and/or sending a call forwarding service request to the home location register (HLR) for forwarding calls, directed to a calling number (621) of the first subscriber identification (61), to a calling number (631, 641, ...) of the selected second subscriber identification (63, 64, ...).

2. Method according to claim 1, **characterised in that** the transmission (S2) of the pseudo location update request is initiated independently from any activity of a mobile station (2, 8) of the subscriber.

3. Method according to claim 1, **characterised in that** the transmission (S2) of the pseudo location update request is initiated by the storage (S1) of the first subscriber identification in the proxy visitor location register (PVLR), the storage (S1) of the first subscriber identification in the proxy visitor location register (PVLR) being initiated and performed independently from any activity of a mobile station (2, 8) of the subscriber.

4. Method according to one of the claims 1 to 3, **characterised in that** the subscriber information comprises a public calling number, **in that** one or more additional, second subscriber identifications are stored for the subscriber in the home location register (HLR), a private calling number being assigned to each of the additional, second subscriber identifications, and **in that** the proxy visitor location register (PVLR) transmits (S11, S14) a service request to the home location register (HLR), the service request comprising the first subscriber identification, a call forwarding service request indicator and one of the private calling numbers to be used as a forwarding number.

5. Method according to one of the claims 1 to 4, **characterised in that** a subscriber request is received (S9) by the proxy visitor location register (PVLR), the subscriber request comprising selection information to determine a subscriber identification, a calling number and/or a mobile station (2, 8) of the subscriber, and **in that** the proxy visitor location register (PVLR) determines (S10) the private calling number to be used as a forwarding number based on the received selection information, and transmits (S11, S14) the service request to the home location register (HLR) in response to the subscriber request.

6. Computerised proxy visitor location register (PVLR) for handling subscriber identifications (61, 63, 64, ...) for a subscriber of a mobile radio network (1), comprising
an entry module (52) for storing (S1) a first identification (61) and of second subscriber identifications (63, 64, ...) of the subscriber in the proxy visitor location register (PVLR),
an update request module (53) for transmitting (S2) a pseudo location update request to a home location register (HLR) of the mobile radio network (1), the pseudo location update request comprising the first subscriber identification stored in the proxy visitor location register (PVLR) and an identification of the proxy visitor location register (PVLR), wherein the identification of the proxy visitor location register (PVLR) is stored in the home location register (HLR),
an update response module (54) in the proxy visitor location register (PVLR) for receiving subscriber information downloaded (S4, S5) to the proxy visitor location register (PVLR) by the home location register (HLR) in response to the pseudo location update request and for storing the received subscriber information (62) in the proxy visitor location register (PVLR) assigned to the first subscriber identification (61),
a subscriber request module (56) for receiving a subscriber request for selecting a second subscriber identification (63, 64, ...), and
a SMS forwarding module (57) for forwarding SMS messages, and/or a service request module (55) for sending a call forwarding service request to the home location register (HLR) for forwarding calls,directed to a calling number (621) of the first subscriber identification (61), to a calling number (631, 641, ...) of the selected second subscriber identification (63, 64, ...).

7. Computerised proxy visitor location register (PVLR) according to claim 6, **characterised in that** the update request module (53) is designed to initiate the transmission (S2) of the pseudo location update request independently from any activity of a mobile station (2, 8) of the subscriber.

8. Computerised proxy visitor location register (PVLR) according to claim 6, **characterised in that** the update request module (53) is designed to initiate the transmission (S2) of the pseudo location update request in response to the storage (S1) of the first subscriber identification (61) in the proxy visitor location register (PVLR), and **in that** the entry module (52) is designed to initiate and perform the storage (S1) of the first subscriber identification (61) independently from any activity of a mobile station (2, 8) of the subscriber.

9. Computerised proxy visitor location register (PVLR) according to one of the claims 6 to 8, **characterised in that** the update response module (54) is designed to receive and store (S7) a public calling number contained in the subscriber information from the home location register (HLR), **in that** the proxy visitor location register (PVLR) comprises one or more additional, second subscriber identifications (63, 64, 6n) for the subscriber, a private calling number (631, 641, 6m) being assigned to each of the additional, second subscriber identifications (63, 64, 6n), and **in that** the proxy visitor location register (PVLR) comprises a service request module (55) for transmitting (S11, S14) a service request to the home location register (HLR), the service request comprising the first subscriber identification, a call forwarding service request indicator and one of the private calling numbers to be used as a forwarding number.

10. Computerised proxy visitor location register (PVLR) according to claim 9, **characterised in that** the proxy visitor location register (PVLR) comprises a subscriber request module (56) for receiving (S9) a subscriber request, the subscriber request comprising selection information to determine a subscriber identification, a calling number and/or a mobile station (2, 8) of the subscriber, and **in that** the service request module (55) is designed to determine the private calling number (631, 641, 6m) to be used as a forwarding number based on the received selection information and to transmit (S11, S14) the service request to the home location register (HLR) in response to the subscriber request.

11. Computer program product comprising a computer readable medium, the computer readable medium containing computer program code means for controlling one or more processors of a proxy visitor location register (PVLR) for handling subscriber identifications for a subscriber of a mobile radio network (1) in such a way
that a first identification (61) and second subscriber identifications (63, 64, ...) of the subscriber are stored (S1) in the proxy visitor location register (PVLR),
that a pseudo location update request is transmitted (S2) to a home location register (HLR) of the mobile radio network (1), the pseudo location update request comprising the first subscriber identification stored in the proxy visitor location register (PVLR) and an identification of the proxy visitor location register (PVLR), wherein the identification of the proxy visitor location register (PVLR) is stored in the home location register (HLR),
that subscriber information downloaded (S4, S5) to the proxy visitor location register (PVLR) by the home location register (HLR) in response to the pseudo location update request is received and stored (S7) in the proxy visitor location register (PVLR) assigned to the first subscriber identification (61),
that a subscriber request for selecting a second subscriber identification (63, 64, ...) is received by the proxy visitor location register (PVLR), and
that messages, addressed to a calling number (621) of the first subscriber identification (61), are forwarded by the proxy visitor location register (PVLR) to a calling number (631, 641, ...) of the selected second subscriber identification (63, 64) and or that a call forwarding service request is sent by the proxy visitor location register (PVLR) to the home location register (HLR) for forwarding calls directed to a calling number (621) of the first subscriber identification (61) to a calling number (631, 641, ...) of the selected second subscriber identification (63, 64).

12. Computer program product according to claim 11, **characterised in that** it comprises further computer program code means for controlling the processor(s) of the proxy visitor location register (PVLR) in such a way that the proxy visitor location register (PVLR) initiates the transmission (S2) of the pseudo location update request independently from any activity of a mobile station (2, 8) of the subscriber.

13. Computer program product according to claim 11, **characterised in that** it comprises further computer program code means for controlling the processor(s) of the proxy visitor location register (PVLR) in such a way that the proxy visitor location register (PVLR) initiates the transmission (S2) of the pseudo location update request in response to the storage (S1) of the first subscriber identification in the proxy visitor location register (PVLR), and that the proxy visitor location register (PVLR) initiates and performs the storage (S1) of the first subscriber identification independently from any activity of a mobile station (2, 8) of the subscriber.

14. Computer program product according to one of the claims 11 to 13, **characterised in that** it comprises further computer program code means for controlling the processor(s) of the proxy visitor location register (PVLR) in such a way that the proxy visitor location register (PVLR) receives and stores (S7) a public calling number contained in the subscriber information from the home location register (HLR), that the proxy visitor location register (PVLR) stores one or more additional, second subscriber identifications (63, 64, 6n) for the subscriber, a private calling number (631, 641, 6m) being assigned to each of the additional, second subscriber identifications, and that the proxy visitor location register (PVLR) transmits (S11, S14) a service request to the home location register (HLR), the service request comprising the first subscriber identification, a call forwarding service request indicator and one of the private calling numbers to be used as a forwarding number.

15. Computer program product according to claim 14, **characterised in that** it comprises further computer program code means for controlling the processor(s) of the proxy visitor location register (PVLR) in such a way that the proxy visitor location register (PVLR) receives a subscriber request (S9), the subscriber request comprising selection information to determine a subscriber identification, a calling number and/or a mobile station (2, 8) of the subscriber, that the proxy visitor location register (PVLR) determines (S10) the private calling number to be used as a forwarding number based on the received selection information, and that the proxy visitor location register (PVLR) transmits (S11, S14) the service request to the home location register (HLR) in response to the subscriber request.

## Patentansprüche

1. Verfahren zur Verarbeitung von Teilnehmerkennungen (61, 63, 64...) für einen Teilnehmer eines Mobilfunknetzes (1), das Folgendes umfasst:
Speichern einer ersten Teilnehmerkennung (61) und weiterer zugewiesener Teilnehmerinformationen in einem Heimatregister (HLR, home location register) des Mobilfunknetzes (1),
**dadurch gekennzeichnet, dass** es außerdem Folgendes umfasst:
mittels eines Eingabemoduls (52) eines informatisierten Proxy-Besucherregisters (PVLR, proxy visitor location register) Speichern (S1) einer ersten Teilnehmerkennung (61) im Proxy-Besucherregister (PVLR),
mittels eines Eingabemoduls (52) des Proxy-Besucherregister (PVLR) Speichern (S1) zweiter Teilnehmerkennungen (63, 64 ...) im Proxy-Besucherregister (PVLR),
Senden (S2) einer Anforderung zur Pseudostandortaktualisierung durch das Proxy-Besucherregister (PVLR) an das Heimatregister (HLR), wobei die Anforderung zur Pseudostandortaktualisierung die erste, im Proxy-Besucherregister (PVLR) gespeicherte Teilnehmerkennung und eine Kennung des Proxy-Besucherregisters (PVLR) umfasst, und wobei die Kennung des Proxy-Besucherregisters (PVLR) im Heimatregister (HLR) gespeichert wird,
Herunterladen (S4, S5) der Teilnehmerinformationen durch das Heimatregister (HLR) zum Proxy-Besucherregister(PVLR), das bei der Anforderung zur Pseudostandortaktualisierung identifiziert wurde,
mittels Teilnehmeranforderungsmodul (56) des Proxy-Besucherregisters (PVLR) Empfang einer Teilnehmeranforderung zur Auswahl einer zweiten Teilnehmerkennung (63, 64, ... ) und
Weiterleiten von Meldungen und/oder Senden einer Rufumleitungsanforderung durch das Proxy-Besucherregister (PVLR) an das Heimatregister (HLR), um an eine Rufnummer (621) der ersten Teilnehmerkennung (61) gerichtete Anrufe an eine Rufnummer (631, 641, ...) der ausgewählten zweiten Teilnehmerkennung (63, 64) umzuleiten.

2. Verfahren nach Anspruch 1, **dadurch gekennzeichnet, dass** das Senden (S2) der Anforderung zur Pseudostandortaktualisierung unabhängig von jeglicher Aktivität einer Mobilstation (2, 8) des Teilnehmers eingeleitet wird.

3. Verfahren nach Anspruch 1, **dadurch gekennzeichnet, dass** das Senden (S2) der Anforderung zur Pseudostandortaktualisierung durch das Speichern (S1) der ersten Teilnehmerkennung im Proxy-Besucherregister (PVLR) eingeleitet wird, wobei das Speichern (S1) der ersten Teilnehmerkennung im Proxy-Besucherregister (PVLR) unabhängig von jeglicher Aktivität einer Mobilstation (2, 8) des Teilnehmers eingeleitet und ausgeführt wird.

4. Verfahren nach einem der Ansprüche 1 bis 3, **dadurch gekennzeichnet, dass** die Teilnehmerinformationen eine öffentliche Rufnummer umfassen, dass eine oder mehrere zusätzliche zweite Teilnehmerkennungen für den Teilnehmer im Heimatregister (HLR) gespeichert werden, wobei eine private Rufnummer jeder der zusätzlichen zweiten Teilnehmerkennungen zugewiesen wird, und dass das Proxy-Besucherregister (PVLR) eine Dienstanforderung an das Heimatregister (HLR) sendet (S11, S14), wobei die Dienstanforderung eine erste Teilnehmerkennung, ein Anforderungszeichen für die Rufumleitung und eine der privaten Rufnummern als zu benutzende Rufumleitungsnummer umfasst.

5. Verfahren nach einem der Ansprüche 1 bis 4, **dadurch gekennzeichnet, dass** eine Teilnehmeranforderung vom Proxy-Besucherregister (PVLR) empfangen wird (S9), wobei die Teilnehmeranforderung Auswahlinformationen umfasst, um eine Teilnehmerkennung, eine Rufnummer und/oder eine Mobilstation (2, 8) des Teilnehmers zu bestimmen, und dass das Proxy-Besucherregister (PVLR) auf den empfangenen Auswahlinformationen basierend die als Rufumleitungsnummer zu benutzende, private Rufnummer bestimmt (S10) und die Dienstanforderung in Antwort auf die Teilnehmeranforderung an das Heimatregister (HLR) sendet (S11, S14).

6. Informatisiertes Proxy-Besucherregister (PVLR) zur Verarbeitung von Teilnehmerinformationen (61, 63, 64, ...) eines Teilnehmers eines Mobilfunknetzes (1), das Folgendes umfasst :
ein Eingabemodul (52) zum Speichern (S1) einer ersten Kennung (61) und zweiter Teihehmerkennungen (63, 64, ...) des Teilnehmers im Proxy-Besucherregister (PVLR),
ein Aktualisierungsanforderungsmodul (53) zum Senden (S2) einer Anforderung zur Pseudostandortaktualisierung an ein Heimatregister (HLR) eines Mobilfunknetzes (1), wobei die Anforderung zur Pseudostandortaktualisierung die im Proxy-Besucherregister (PVLR) gespeicherte erste Teilnehmerkennung und eine Kennung des Proxy-Besucherregister (PVLR) umfasst, und wobei die Kennung des Proxy-Besucherregister (PVLR) im Heimatregister (HLR) gespeichert wird,
ein Aktualisierungsantwortmodul (54) im Proxy-Besucherregister (PVLR) zum Empfangen der vom Heimatregister (HLR) in Antwort auf die Anforderung zur Pseudostandortaktualisierung zum Proxy-Besucherregister (PVLR) heruntergeladenen (S4, S5) Teilnehmerinformationen und zum Speichern der empfangenen Teilnehmerinformationen (62) in dem der ersten Teilnehmerkennung (61) zugewiesenen Proxy-Besucherregister (PVLR),
ein Teilnehmeranforderungsmodul (56) zum Empfangen einer Teilnehmeranforderung zur Auswahl einer zweiten Teilnehmerkennung (63, 64, ...) und
ein SMS-Weiterleitungsmodul (57) zur Weiterleitung von SMS-Nachrichten und/oder ein Dienstanforderungsmodul (55) zum Senden einer Rufumleitungsanforderung an das Heimatregister (HLR) zur Umleitung von Anrufen, die an eine Rufnummer (621) der ersten Teilnehmerkennung (61), an eine Rufnummer (631, 641, ...) der ausgewählten zweiten Teilnehmerkennung (63, 64, ...) gerichtet sind.

7. Informatisiertes Proxy-Besucherregister (PVLR) nach Anspruch 6, **dadurch gekennzeichnet, dass** das Aktualisierungsanforderungsmodul (53) so ausgeführt ist, dass es unabhängig von jeglicher Aktivität einer Mobilstation (2, 8) des Teilnehmers das Senden (S2) der Anforderung zur Pseudostandortaktualisierung einleitet.

8. Informatisiertes Proxy-Besucherregister (PVLR) nach Anspruch 6, **dadurch gekennzeichnet, dass** das Aktualisierungsanforderungsmodul (53) so ausgeführt ist, dass es das Senden (S2) der Anforderung zur Pseudostandortaktualisierung in Antwort auf das Speichern (S1) der ersten Teilnehmerkennung (61) im Proxy-Besucherregister (PVLR) einleitet, und dass das Eingabemodul (52) so ausgeführt ist, dass es unabhängig von jeglicher Aktivität einer Mobilstation (2, 8) des Teilnehmers die Speicherung (S1) der ersten Teilnehmerkennung (61) einleitet und ausführt.

9. Informatisiertes Proxy-Besucherregister (PVLR) nach einem der Ansprüche 6 bis 8, **dadurch gekennzeichnet, dass** das Aktualisierungsantwortmodul (54) so ausgeführt ist, dass es eine in den Teilnehmerinformationen enthaltene öffentliche Rufnummer vom Heimatregister (HLR) empfängt und speichert (S7), dass das Proxy-Besucherregister (PVLR) eine oder mehrere zusätzliche zweite Teilnehmerkennungen (63, 64, 6n) für den Teilnehmer aufweist, wobei eine private Rufnummer (631, 641, 6m) jeder der zusätzlichen zweiten Teilnehmerkennungen (63, 64, 6n) zugewiesen wird, und dass das Proxy-Besucherregister (PVLR) ein Dienstanforderungsmodul (55) zum Senden (S11, S14) einer Dienstanforderung an das Heimatregister (HLR) aufweist, wobei die Dienstanforderung die erste Teilnehmerkennung, ein Anforderungszeichen für die Rufumleitung und eine der privaten Rufnummern als zu benutzende Rufumleitungsnummer umfasst.

10. Informatisiertes Proxy-Besucherregister (PVLR) nach Anspruch 9, **dadurch gekennzeichnet, dass** das Proxy-Besucherregister (PVLR) ein Teilnehmeranforderungsmodul (56) zum Empfangen (S9) einer Teilnehmeranforderung aufweist, wobei die Teilnehmeranforderung Auswahlinformationen umfasst, um eine Teilnehmerkennung, eine Rufnummer und/oder eine Mobilstation (2, 8) des Teilnehmers zu bestimmen, und dass das Dienstanforderungsmodul (55) so ausgeführt ist, dass es auf den empfangenen Auswahlinformationen basierend die als Rufumleitungsnummer zu benutzende, private Rufnummer (631, 641, 6m) bestimmt und die Dienstanforderung in Antwort auf die Teilnehmeranforderung an das Heimatregister (HLR) sendet (S11, S14).

11. Rechnerprogrammprodukt, das ein rechnerlesbares Medium aufweist, wobei das rechnerlesbare Medium Rechnerprogrammcodemittel zur Steuerung eines oder mehrerer Prozessoren eines Proxy-Besucherregisters (PVLR) enthält, um Teilnehmerinformationen eines Teilnehmers eines Mobilfunknetzes (1) derart zu verarbeiten,
dass die erste Kennung (61) und zweite Teilnehmerkennungen (63, 64, ...) des Teilnehmers in dem Proxy-Besucherregister(PVLR) gespeichert (S1) werden,
dass eine Anforderung zur Pseudostandortaktualisierung an das Heimatregister (HLR) des Mobilfunknetzes (1) gesendet (S2) wird, wobei die Anforderung zur Pseudostandortaktualisierung die im Proxy-Besucherregister (PVLR) gespeicherte, erste Teilnehmerkennung und eine Kennung des Proxy-Besucherregister (PVLR) umfasst, und wobei die Kennung des Proxy-Besucherregister (PVLR) im Heimatregister (HLR) gespeichert wird,
dass vom Heimatregister (HLR) zum Proxy-Besucherregister(PVLR) in Antwort auf die Anforderung zur Pseudostandortaktualisierung heruntergeladene (S4, S5) Teilnehmerinformationen im der ersten Teilnehmerkennung (61) zugewiesenen Proxy-Besucherregister (PVLR) empfangen und gespeichert (S7) werden,
dass eine Teilnehmeranforderung zur Auswahl einer zweiten Teilnehmerkennung (63. 64, ...) vom Proxy-Besucherregister (PVLR) empfangen wird, und
dass an eine Rufnummer (621) gerichtete Meldungen der ersten Teilnehmerkennung (61) vom Proxy-Besucherregister (PVLR) an eine Rufnummer (631, 641, ...) der gewählten zweiten Teilnehmerkennung (63, 64) weitergeleitet werden und/oder dass eine Rufumleitungsanforderung vom Proxy-Besucherregister (PVLR) an das Heimatregister (HLR) gesendet wird, um an eine Rufnummer (621) der ersten Teilnehmerkennung (61) gerichtete Anrufe an eine Rufnummer (631, 641, ...) der ausgewählten zweiten Teilnehmerkennung (63, 64) umzuleiten.

12. Rechnerprogrammprodukt nach Anspruch 11, **dadurch gekennzeichnet, dass** es außerdem Rechnerprogrammcodemittel umfasst, um den (die) Prozessor(en) des Proxy-Besucherregisters (PVLR) derart zu steuern, dass das Proxy-Besucherregister (PVLR) das Senden (S2) der Anforderung zur Pseudostandortaktualisierung unabhängig von jeglicher Aktivität einer Mobilstation (2, 8) des Teilnehmers einleitet.

13. Rechnerprogrammprodukt nach Anspruch 11, **dadurch gekennzeichnet, dass** es außerdem Rechnerprogrammcodemittel umfasst, um den (die) Prozessor(en) des Proxy-Besucherregisters (PVLR) derart zu steuern, dass das Proxy-Besucherregister (PVLR) das Senden (S2) der Anforderung zur Pseudostandortaktualisierung in Antwort auf das Speichern (S1) der ersten Teilnehmerkennung im Proxy-Besucherregister (PVLR) einleitet, und dass das Proxy-Besucherregister (PVLR) unabhängig von jeglicher Aktivität einer Mobilstation (2, 8) des Teilnehmers die Speicherung (S1) der ersten Teilnehmerkennung einleitet und ausführt.

14. Rechnerprogrammprodukt nach einem der Ansprüche 11 bis 13, **dadurch gekennzeichnet, dass** es außerdem Rechnerprogrammcodemittel umfasst, um den (die) Prozessor(en) des Proxy-Besucherregisters (PVLR) derart zu steuern, dass das Proxy-Besucherregister (PVLR) eine in den Teilnehmerinformationen enthaltene öffentliche Rufnummer vom Heimatregister (HLR) empfängt und speichert (S7), dass das Proxy-Besucherregister (PVLR) eine oder mehrere zusätzliche zweite Teilnehmerkennungen (63, 64, 6n) für den Teilnehmer speichert, wobei eine private Rufnummer (631, 641, 6m) jeder der zusätzlichen zweiten Teilnehmerkennungen zugewiesen wird, und dass das Proxy-Besucherregister (PVLR) eine Dienstanforderung an das Heimatregister (HLR) sendet (S11, S14), wobei die Dienstanforderung die erste Teilnehmerkennung, ein Anforderungszeichen für die Rufumleitung und eine der privaten Rufnummern als zu benutzende Rufumleitungsnummer umfasst.

15. Rechnerprogrammprodukt nach Anspruch 14, **dadurch gekennzeichnet, dass** es außerdem Rechnerprogrammcodemittel umfasst, um den (die) Prozessor(en) des Proxy-Besucherregisters (PVLR) derart zu steuern, dass das Proxy-Besucherregister (PVLR) eine Teilnehmeranforderung empfängt (S9), wobei die Teilnehmeranforderung Auswahlinformationen umfasst, um eine Teilnehmerkennung, eine Rufnummer und/oder eine Mobilstation (2, 8) des Teilnehmers zu bestimmen, dass das Proxy-Besucherregister (PVLR) auf den erhaltenen Auswahlinformationen basierend die als Rufumleitungsnummer zu benutzende, private Rufnummer bestimmt (S10), und dass das Proxy-Besucherregister (PVLR) die Dienstanforderung in Antwort auf die Teilnehmeranforderung an das Heimatregister (HLR) sendet (S11, S14).

## Revendications

1. Procédé pour le traitement d'identifications d'abonnés (61, 63, 64) pour un abonné d'un réseau de téléphonie mobile (1), comprenant
le stockage d'une première identification d'abonné (61) et d'autres informations d'abonné attribuées dans un registre de localisation nominale (HLR) du réseau de téléphonie mobile (1)
**caractérisé en ce qu'**il comprend en outre
au moyen d'un module d'entrée (52) d'un registre de localisation des visiteurs informatisé par serveur mandataire (proxy) (PVLR), le stockage (S1) de la première identification d'abonne (61) dans le registre de localisation des visiteurs informatisé par serveur mandataire (proxy) (PVLR),
au moyen d'un module d'entrée (52) d'un registre de localisation des visiteurs informatisé par serveur mandataire (proxy) (PVLR), le stockage (S1) de secondes identifications d'abonne (63, 64,...) dans le registre de localisation des visiteurs informatisé par serveur mandataire (proxy) (PVLR)
la transmission (S2) d'une pseudo requête de mise à jour de localisation par le registre de localisation des visiteurs informatisé par serveur mandataire (proxy) (PVLR) au registre de localisation nominale (HLR), la pseudo requête de mise à jour de localisation comprenant la première identification d'abonnés stockée dans le registre de localisation des visiteurs informatisé par serveur mandataire (proxy) (PVLR) et une identification du registre de localisation des visiteurs informatisé par serveur mandataire (proxy) (PVLR) dans lequel l'identification du registre de localisation des visiteurs informatisé par serveur mandataire (proxy) (PVLR) est stockée dans le registre de localisation nominale (HLR),
le téléchargement descendant (S4, S5) de l'information d'abonné par le registre de localisation nominale (HLR) en direction du registre de localisation des visiteurs informatisé par serveur mandataire (proxy) (PVLR) identifié dans la pseudo requête de mise à jour de localisation,
au moyen d'un module de requête d'abonné (56) du registre de localisation des visiteurs informatisé par serveur mandataire (proxy) (PVLR), réception d'une requête d'abonné pour la sélection d'une seconde identification d'abonné (63, 64,...) et
le registre de localisation des visiteurs informatisé par serveur mandataire (proxy) (PVLR) acheminant des messages et/ou envoyant une requête de service d'acheminement d'appel au registre de localisation nominale (HLR) pour acheminer les appels dirigés d'un premier numéro appelant (621) de la première identification d'abonné (61), vers un numéro appelant (631, 641,...) de la seconde indentification d'abonné sélectionnée (63, 64,...).

2. Procédé selon la revendication 1, **caractérisé en ce que** la transmission (S2) de la pseudo requête de mise à jour de localisation est initiée indépendamment de toute activité d'une station mobile (2, 8) de l'abonné.

3. Procédé selon la revendication 1, **caractérisé en ce que** la transmission (S2) de la pseudo requête de mise à jour de localisation est initiée par le stockage (S1) de la première identification d'abonné dans le registre de localisation des visiteurs informatisé par serveur mandataire (proxy) (PVLR), le stockage (S1) de la première identification d'abonné dans le registre de localisation des visiteurs informatisé par serveur mandataire (proxy) (PVLR) étant initié et effectué indépendamment de toute activité d'une station mobile (2, 8) de l'abonné.

4. procédé selon l'une des revendications 1 à 3, **caractérisé en ce que** l'information d'abonné comprend un numéro d'appel public, **en ce que** une ou plusieurs secondes identifications additionnelles d'abonné sont stockées pour l'abonné dans le registre de localisation nominale (HLR), un numéro d'appel privé étant attribué à chacune des secondes identifications additionnelles d'abonné et **en ce que** le registre de localisation des visiteurs informatisé par serveur mandataire (proxy) (PVLR) transmet (S11, S14) un requête de service au registre de localisation nominale (HLR), la requête de service comprenant la première identification d'abonné, un indicateur de requête de service de renvoi d'appel et l'un des numéros d'appel privés à utiliser en tant que numéro de renvoi d'appel.

5. Procédé selon l'une des revendications 1 à 4, **caractérisé en ce que** une requête d'abonné est reçue (S9) par le registre de localisation des visiteurs informatisé par serveur mandataire (proxy) (PVLR), la requête d'abonné comprenant l'information de sélection pour déterminer une identification d'abonné, un numéro d'appel et/ou une station mobile (2, 8) de l'abonné et **en ce que** le registre de localisation des visiteurs informatisé par serveur mandataire (proxy) (PVLR) détermine (S10) le numéro d'appel à utiliser en tant que numéro de renvoi basé sur l'information reçue sélectionnée et transmet (S11, S14) la requête de service au registre de localisation nominale (HLR) en réponse à la requête d'abonné.

6. Registre de localisation des visiteurs informatisé par serveur mandataire (proxy) (PVLR) pour le traitement d'identifications d'abonné (61, 63, 64,...) pour un abonné d'un réseau de téléphonie mobile (1), comprenant
un module d'entrée (52) pour le stockage (S1) d'une première identification (61) et de secondes identifications d'abonné (63, 64,...) de l'abonné dans le registre de localisation des visiteurs informatisé par serveur mandataire (proxy) (PVLR),
un module de requête de mise à jour (53) pour la transmission (S2) d'une pseudo requête de mise à jour de localisation à un registre de localisation nominale (HLR) du réseau de téléphonie mobile (1), la pseudo requête de mise à jour de localisation comprenant une première identification d'abonné stockée dans le registre de localisation des visiteurs informatisé par serveur mandataire (proxy) (PVLR) et une identification pour le registre de localisation des visiteurs informatisé par serveur mandataire (proxy) (PVLR), dans laquelle l'identification du registre de localisation des visiteurs informatisé par serveur mandataire (proxy) (PVLR) est stockée dans le registre de localisation nominale (HLR),
un module de réponse de mise à jour (54) dans le registre de localisation des visiteurs informatisé par serveur mandataire (proxy) (PVLR) pour recevoir l'information d'abonné téléchargée (S4, S5) vers le registre de localisation des visiteurs informatisé par serveur mandataire (proxy) (PVLR) par le registre de localisation nominale (HLR) en réponse à la pseudo requête de mise à jour de localisation et pour stocker l'information d'abonné reçue (62) dans le registre de localisation des visiteurs informatisé par serveur mandataire (proxy) (PVLR) assigné à la première identification d'abonné (61),
un module de requête d'abonné (56) pour recevoir une requête d'abonné pour sélectionner une seconde identification d'abonné (63, 64,...) et
un module d'acheminement SMS (57) pour acheminer des messages SMS et/ou un module de requête de service (55) pour envoyer une requête de service de renvoi d'appel au registre de localisation nominale (HLR) pour renvoyer des appels dirigée vers un numéro d'appel (621) de la première identification d'abonné (61), à un numéro d'appel (631, 641,...) de la seconde indentification d'abonnée sélectionnée (63, 64,...).

7. Registre de localisation des visiteurs informatisé par serveur mandataire (proxy) (PVLR) selon la revendication 6, **caractérisé en ce que** le module de requête de mise à jour (53) est conçu pour initier la transmission (S2) de la pseudo requête de mise à jour de localisation indépendamment de toute activité d'une station mobile (2, 8) de l'abonné.

8. Registre de localisation des visiteurs informatisé par serveur mandataire (proxy) (PVLR) selon la revendication 6, **caractérisé en ce que** le module de requête de mise à jour (53) est conçu pour initier la transmission (S2) de la pseudo requête de mise à jour de localisation en réponse au stockage (S1) de la première identification (61) dans le registre de localisation des visiteurs informatisé par serveur mandataire (proxy) (PVLR) et **en ce que** le module d'entrée (52) est conçu pour initier et effectuer le stockage (S1) de la première identification d'abonné (61) indépendamment de toute activité d'une station mobile (2, 8) de l'abonné.

9. Registre de localisation des visiteurs informatisé par serveur mandataire (proxy) (PVLR) selon l'une des revendications 6 à 8, **caractérisé en ce que** le module de réponse de mise à jour (54) est conçu pour recevoir et stocker (S7) un numéro d'appel public contenu dans l'information d'abonné depuis le registre de localisation nominale (HLR), **en ce que** le registre de localisation des visiteurs informatisé par serveur mandataire (proxy) (PVLR) comprend une ou plusieurs secondes identifications additionnelles d'abonné (63, 64, 6n) pour l'abonné, un numéro d'appel privé (631, 641, 6m) étant attribué à chacune des secondes identifications additionnelles d'abonné (63, 64, 6n) et **en ce que** le registre de localisation des visiteurs informatisé par serveur mandataire (proxy) (PVLR) comprend un module de requête de service (55) pour la transmission (S11, S14) d'une requête de service au registre de localisation nominale (HLR), la requête de service comprenant la première identification d'abonné, un indicateur de requête de service de renvoi d'appel et un des numéros d'appel privés à utiliser en tant que numéro de renvoi.

10. Registre de localisation des visiteurs informatisé par serveur mandataire (proxy) (PVLR) selon la revendication 9, **caractérisé en ce que** le registre de localisation des visiteurs informatisé par serveur mandataire (proxy) (PVLR) comprend un module de requête d'abonné (56) pour recevoir (S9) une requête d'abonné, la requête d'abonné comprenant des informations de sélection pour déterminer une identification de l'abonné, un numéro d'appel et/ou une station mobile (2, 8) de l'abonné et **en ce que** le module de requête de service (55) est conçu pour déterminer le numéro d'appel privé (631, 641, 6m) à utiliser en tant que numéro de renvoi basé sur l'information de sélection reçue et pour transmettre (S11, S14) la requête de service au registre de localisation nominale (HLR) en réponse à la requête d'abonné.

11. Produit de programme informatique comprenant un support lisible sur ordinateur, le support lisible sur ordinateur contenant des moyens de code de programme informatique pour commander un ou plusieurs processeurs d'un registre de localisation des visiteurs informatisé par serveur mandataire (proxy) (PVLR) pour traiter des identifications d'abonnés pour un abonné d'un réseau de téléphonie mobile (1) de sorte
qu'une première identification (61) et des secondes identifications d'abonné (63, 64,...) de l'abonné sont stockées (S1) dans le registre de localisation des visiteurs informatisé par serveur mandataire (proxy) (PVLR),
qu'une pseudo requête de mise à jour de localisation est transmise (S2), à un registre de localisation nominale (HLR) du réseau de téléphonie mobile (1), la pseudo requête de mise à jour de localisation comprenant la première identification d'abonné stockée dans le registre de localisation des visiteurs informatisé par serveur mandataire (proxy) (PVLR) et une identification du registre de localisation des visiteurs informatisé par serveur mandataire (proxy) (PVLR), dans lequel l'identification du registre de localisation des visiteurs informatisé par serveur mandataire (proxy) (PVLR) est stockée dans le registre de localisation nominale (HLR),
que l'information d'abonné téléchargée (S4, S5) vers le registre de localisation des visiteurs informatisé par serveur mandataire (proxy) (PVLR) par le registre de localisation nominale (HLR) en réponse à la pseudo requête de mise à jour de localisation est reçue et stockée (S7) dans le registre de localisation des visiteurs informatisé par serveur mandataire (proxy) (PVLR) attribué à la première identification d'abonné (61),
qu'une requête d'abonné pour la sélection de la seconde identification d'abonné (63, 64, ...) est reçue par le registre de localisation des visiteurs informatisé par serveur mandataire (proxy) (PVLR) et
que les messages adressés à un numéro d'appel (621) de la première identification d'abonné (61), sont acheminés par le registre de localisation des visiteurs informatisé par serveur mandataire (proxy) (PVLR) à un numéro d'appel (631, 641,...) de la seconde identification sélectionnée d'abonné (63, 64), et/ou qu'une pseudo requête de mise à jour de localisation est envoyée par le registre de localisation des visiteurs informatisé par serveur mandataire (proxy) (PVLR) au registre de localisation nominale (HLR) pour renvoyer des appels dirigés vers un numéro d'appel (621 ) de la première identification d'abonné (61) vers un numéro d'appel (631, 641, ...) de la seconde identification sélectionné d'abonné (63, 64).

12. Produit de programme informatique selon la revendication 11, **caractérisé en ce qu'**il comprend un outre des moyens de code de programme informatique pour commander des processeurs du registre de localisation des visiteurs informatisé par serveur mandataire (proxy) (PVLR) de sorte que le registre de localisation des visiteurs informatisé par serveur mandataire (proxy) (PVLR) initie la transmission (S2) de la pseudo requête de mise à jour de localisation indépendamment de toute activité d'une station mobile (2, 8) de l'abonné.

13. Produit de programme informatique selon la revendication 11, **caractérisé en ce qu'**il comprend un outre des moyens de code de programme informatique pour commande des processeurs du registre de localisation des visiteurs informatisé par serveur mandataire (proxy) (PVLR) de sorte que le registre de localisation des visiteurs informatisé par serveur mandataire (proxy) (PVLR) initie la transmission (S2) de la pseudo requête de mise à jour de localisation en réponse au stockage (S1) de la première identification d'abonné dans le registre de localisation des visiteurs informatisé par serveur mandataire (proxy) (PVLR) et **en ce que** le registre de localisation des visiteurs informatisé par serveur mandataire (proxy) (PVLR) initie et exécute le stockage (S1) de la première identification d'abonné indépendamment de toute activité d'une station mobile (2, 8) de l'abonné.

14. Produit de programme informatique selon l'une des revendications 11 à 13, **caractérisé en ce qu'**il comprend en outre des moyens de code de programme informatique pour commander des processeurs du registre de localisation des visiteurs informatisé par serveur mandataire (proxy) (PVLR) de sorte que le registre de localisation des visiteurs informatisé par serveur mandataire (proxy) (PVLR) reçoit et stocke (S7) un numéro d'appel public contenu dans l'information d"abonné provenant du registre de localisation nominale (HLR), que le registre de localisation des visiteurs informatisé par serveur mandataire (proxy) (PVLR) stocke une ou plusieurs secondes identifications d'abonné additionnelles (63, 64, 6n) pour l'abonné, un numéro privé d'appel (631, 641, 6m) étant assigné à chacune des secondes identifications additionnelles d'abonné et **en ce que** le registre de localisation des visiteurs informatisé par serveur mandataire (proxy) (PVLR) transmet (S11, S14) une requête de service au registre de localisation nominale (HLR), la requête de service comprenant la première identification d'abonné, une requête de service de renvoi d'appel et un des numéros d'appel privés à utiliser en tant que numéro de renvoi.

15. Produit de programme informatique selon la revendication 14, **caractérisé en ce qu'**il comprend en outre des moyens de code de programme informatique pour commander des processeurs du registre de localisation des visiteurs informatisé par serveur mandataire (proxy) (PVLR) de sorte que le registre de localisation des visiteurs informatisé par serveur mandataire (proxy) (PVLR) reçoit une requête d'abonné (S9), la requête d'abonné comprenant l'information de sélection pour déterminer une identification d'abonné, un numéro d'appel et/ou une station mobile (2, 8) de l'abonné, **en ce que** le registre de localisation des visiteurs informatisé par serveur mandataire (proxy) (PVLR) détermine (S10) le numéro d'appel privé à utiliser en tant que numéro de renvoi basé sur l'information de sélection reçue et **en ce que** le registre de localisation des visiteurs informatisé par serveur mandataire (proxy) (PVLR) transmet (S11, S14) la requête de service au registre de localisation nominale (HLR) en réponse à la requête d'abonné.
